# EUROPEAN PATENT APPLICATION

(11) **EP 1 469 230 A2**
(43) Date of publication of application: **20.10.2004**
(21) Application number: 04009040.9
(22) Date of filing: 15.04.2004
(51) Int. Cl.: F16H 13/08

(54) **Transmission-roller supporting mechanism on transmission apparatus of wedge roller type**

(30) Priority: 18.04.2003 JP 2003146993
(71) Applicant: Okoshi, Hideo, Fujisawa-shi, Kanagawa-ken (JP); Mikuni Makino Industrial Co.,Ltd., Ashigarakami-gun, Kanagawa (JP)
(72) Inventor: Okoshi, Hideo, Fujisawa-shi Kanagawa (JP)
(74) Representative: Viering, Jentschura & Partner

(57) **Abstract**

A transmission-roller supporting mechanism on a transmission apparatus of a wedge roller type is provided with: an input roller (11); an output ring (21); three transmission rollers (41, 51, 61) in an unequally-spaced space generated between the input roller and the output ring; and a support roller (71). At least one of the three transmission rollers is not fixed in position and is regarded as a movable roller supported by the support roller with its position fixed or movable. The rollers become out of contact with each other by moving the position of the support roller. The transmission of torque is cut off by moving the movable roller by the support roller. Alternatively, two transmission rollers are supported by the support roller. The two movable rollers select and play the roles of a fixed roller and a wedge roller, which causes the transmission of two-way torque.

## Description

### BACKGROUND OF THE INVENTION

### 1. Field of the Invention

The present invention relates to the structure of a transmission-roller supporting mechanism on a rolling friction transmission apparatus of a wedge roller type (e.g., a rolling friction transmission gear of a wedge roller type) which can switch a function of transmitting two-way torque and a clutch function of cutting off the transmission of the torque in addition to a one-way clutch function, which is usually provided for a transmission apparatus of a wedge roller type, out of rolling friction transmission apparatuses, each including a traction drive which uses the viscosity of a fluid oil film at the extreme-pressure generated between two rolling surfaces to thereby transmit power or rotation. The rolling friction transmission apparatus of a wedge roller type is provided with three transmission rollers in contact with the rolling surfaces of an input roller and an output ring in an unequally spaced space generated unequally between the rolling surfaces of the input roller and the output ring, which are mutually eccentric. Two of the transmission rollers are fixed rollers with their rotational center shafts fixed, and the rest is used as a "wedge roller". By frictional forces acting between the input roller and the output ring because of the torque applied to the input roller, the wedge roller is drawn in the direction that the unequally-spaced space is narrower. The frictional forces are expanded by a wedge action, and large normal forces are generated on the contact surfaces between each of the transmission rollers and each of the input roller and the output ring. Thus, the transmission apparatus of a wedge roller type transmits the torque without slipping on the contact surfaces.

### 2. Description of the Related Art

A transmission apparatus of a wedge roller type can transmit torque caused by the rolling of cylindrical surfaces, which can be easily machined highly accurately, and can apply a pressure suitable for the torque between the cylindrical surfaces by a pressure mechanism with a simple structure. Thus, it is used for an electric-assist bicycle or the like as a reduction gear which is small, light, makes less noise, and has high transmission efficiency as well as with a one-way clutch action.

However, in order to give the one-way clutch function, it is necessary to apply a pre-pressure to some extent even when the transmission apparatus does not transmit the torque. This is to make sure biting or engagement in the case where the small torque to be transmitted is applied. When the transmission apparatus functions as the one-way clutch, drag torque occurs by the pre-pressure. If this apparatus is used for the above-described application or the like, even the small drag torque by the pre-pressure is unfavorable when it is desired to extend the driving distance or inertial distance of a vehicle as long as possible.

In some cases, it is necessary to transmit two-way rotation, which is, for example, when the transmission apparatus of a wedge roller type is used as the reduction gear for a wheel-in motor or the like. In this case, the one-way clutch function is unnecessary but the clutch function of cutting off the transmission of the torque with respect to the two-way rotation is required in some cases.

When the transmission apparatus of a wedge roller type is used for a vehicle or the like, the reduction gear is required to be light.

There is conventionally no rolling friction transmission apparatus which realizes such a request.

Recently, for the purpose of mounting it on an electric vehicle, a reduction gear of a wedge roller type has been studied which transmits the two-way torque and which is provided with the clutch function (Preprints of Society of Automotive Engineers of Japan, Inc. Annual Congress, No. 39-02). This reduction gear has two pairs of a wedge roller and a transmission roller with a fixed shaft, which are exclusive for the torque in respective directions, in an unequally-spaced space between an input roller and an output ring. This reduction gear also has the clutch function by a mechanism of evacuating the wedge roller.

In this structure, however, it is necessary to have two pairs of the wedge roller and the transmission roller with the fixed shaft. Moreover, in order to evacuate the wedge roller, it is necessary to move the shaft of the wedge roller substantially parallel to the rolling surfaces of the input roller and the output ring so that the transmission roller does not apply unreasonable forces to the rolling surfaces of the input roller and the output ring. This causes the complicated structure, many components, and increase in size of the reduction gear, which is disadvantageous in size, weight, and cost to use the reduction gear for the electric vehicle.

Typically, in the transmission apparatus of a wedge roller type, it is necessary to avoid the large change in the relative position of the input roller and the output ring when the wedge roller moves by the one-way clutch action from a spatial position, where the transmission of the torque is cut-off, to a spatial position where the clutch connects. Thus, it is difficult to give a large space or gap to the contact surfaces between each of the input roller and the output ring and the transmission roller with the fixed shaft even at a spatial position where the clutch is cut off. It is necessary to maintain the transmission roller with the fixed shaft at a very narrow spatial position where they may possibly be in contact with each other.

Moreover, in the transmission apparatus for transmitting the two-way torque described above, four transmission rollers each of which has the fixed shaft are fixed in position. Even when the clutch mechanism is deactivated to evacuate the wedge roller, the four transmission rollers each of which has the fixed shaft are in the state that they rotate with them almost in contact with the input roller and the output ring. Therefore, this structure not only requires high machining accuracy in order to place the four transmission rollers each of which has the fixed shaft at a spatial position where they are in this connection state, but also causes the drag torque to be large when the clutch is cut off.

### SUMMARY OF THE INVENTION

In the related arts, as described above, it is difficult to sufficiently reduce the drag torque in the case of acting as the one-way clutch.

It is therefore a first object of the present invention to provide a transmission apparatus of a wedge roller type which can reduce the drag torque when the clutch is cut off.

It is a second object of the present invention to provide the transmission apparatus of a two-way type, which is not provided with the wedge rollers and the transmission rollers each of which has the fixed shaft exclusive for the two-way rotation, and in which two transmission rollers automatically invert the roles of the wedge roller and the transmission roller with the fixed shaft.

The above object of the present invention can be achieved by a transmission-roller supporting mechanism on a transmission apparatus of a wedge roller type provided with: (i) input and output shafts which are mutually parallel and eccentric and are rotatably supported by a fixed part; (ii) an input roller which is disposed coaxially to the input shaft and has a cylindrical rolling surface at an outer surface thereof; (iii) an output ring which is disposed coaxially to the output shaft so as to surround the input roller and has a cylindrical rolling surface at an inner surface thereof; (iv) three transmission rollers which have cylindrical transmission surfaces at outer surfaces thereof respectively and are placed in contact with the rolling surfaces of the input roller and the output ring, in an unequally-spaced space generated between the rolling surfaces of the input roller and the output ring, one of the three transmission rollers being a fixed roller supported rotatably by a fixed shaft fixed to the fixed part in parallel to the input and output shafts, which is placed at (I) a spatial position where the unequally-spaced space is at the widest or (II) a spatial position where the unequally-spaced space is the narrowest, the other two of the three transmission rollers being transmission rollers with the same diameter which are placed in the middle of (I) the spatial position where the unequally-spaced space is at the widest and (II) the spatial position where the unequally-spaced space is the narrowest and which are placed symmetrically to a flat surface including the input and output shafts and the fixed shaft, at least one of the two transmission rollers with the same diameter being a movable transmission roller whose center shaft is not fixed; and (v) a support roller which is disposed on the side where the unequally-spaced space is wider or narrower than that the movable transmission roller and which has a cylindrical guide surface at an outer surface thereof, the support roller being supported rotatably by a support shaft supported on the fixed part at a spatial position where the movement of the movable transmission roller is restricted in the space.

In one aspect of the transmission-roller supporting mechanism on the transmission apparatus of a wedge roller type of the present invention, it is provided with: a first moving mechanism of moving the spatial position of the support shaft of the support roller to (i) a spatial position where a pre-pressure is applied on the contact surfaces between the transmission surface of the movable transmission roller and each of the rolling surfaces of the input roller and the output ring in the direction that the support roller pushes the movable transmission roller to the side where the unequally-spaced space is narrower, with the support roller initially placed on the side where the unequally-spaced space is wider than that of the movable transmission roller, or (ii) a spatial position where the pre-pressure is removed, so that the contact surfaces are out of contact with each other; and a first applying mechanism of applying the movable transmission roller with an elastic force in the direction that the unequally-spaced space is wider.

In another aspect of the transmission-roller supporting mechanism on the transmission apparatus of a wedge roller type of the present invention, it is provided with: a second moving mechanism of moving the spatial position of the support shaft of the support roller by a second applying mechanism to (i) a spatial position where a pre-pressure is applied on the contact surfaces between the transmission surface of the movable transmission roller and each of the rolling surfaces of the input roller and the output ring and the support surface does not prevent the movable transmission roller from moving to the side where the unequally-spaced space is narrower along with the transmission of torque, with the support roller initially placed on the side where the unequally-spaced space is narrower than that of the movable transmission roller, or (ii) a spatial position where the pre-pressure is removed from the contact surfaces between the transmission surface of the movable transmission roller and each of the rolling surfaces of the input roller and the output ring, so that the contact surfaces are out of contact with each other; and the second applying mechanism of applying the movable transmission roller with an elastic force in the direction that the unequally-spaced space is narrower.

In another aspect of the transmission-roller supporting mechanism on the transmission apparatus of a wedge roller type of the present invention, it is provided with: a third moving mechanism of moving the support roller by the rotation of an eccentric shaft, wherein the support shaft of the support roller functions as the eccentric shaft.

In another aspect of the transmission-roller supporting mechanism on the transmission apparatus of a wedge roller type of the present invention, it is provided with: two pairs of support rollers corresponding to the two transmission rollers with the same diameter, which allow the transmission and cut-off of two-way rotational torque and a one-way clutch function.

According to the transmission-roller supporting mechanism on the transmission apparatus of a wedge roller type of the present invention, it is provided with: (i) the input and output shafts which are mutually eccentric and are rotatably supported by a fixed part; (ii) the input roller which is coaxially to the input shaft and has a cylindrical rolling surface at an outer surface thereof; (iii) the output ring which is disposed coaxially to the output shaft so as to surround the input roller and has a cylindrical rolling surface at an inner surface thereof.

The transmission-roller supporting mechanism is also provided with (iv) three transmission rollers which have cylindrical transmission surfaces at outer surfaces thereof respectively and are placed in contact with the rolling surfaces of the input roller and the output ring, in an unequally-spaced space generated between the rolling surfaces of the input roller and the output ring. One of the three transmission rollers is a fixed roller supported rotatably by a fixed shaft fixed to the fixed part in parallel to the input and output shafts.

The other two of the three transmission rollers are transmission rollers with the same diameter which are placed in the middle of the spatial position where the unequally-spaced space is at the widest and the spatial position where the unequally-spaced space is the narrowest and which are placed symmetrically to a flat surface including the input and output shafts and the fixed shaft.

At least one of the two transmission rollers with the same diameter is a movable transmission roller whose center shaft is movable. The transmission-roller supporting mechanism is also provided with: (v) a support roller which is disposed on the side where the unequally-spaced space is wider or narrower than that the movable transmission roller and which has a cylindrical guide surface at an outer surface thereof. The support roller is supported rotatably by a support shaft supported on the fixed part at a spatial position where the movement of the movable transmission roller is restricted in the space.

The rest of the three transmission rollers is supported rotatably by a fixed shaft fixed to the fixed part in parallel to the input and output shafts.

When the support roller is at a spatial position which is on the side where the unequally-spaced space is wider (i.e. larger) than that of the movable transmission roller and at which a pre-pressure is applied between the transmission surface of the transmission roller and each of the rolling surfaces of the input roller and the output ring, if the torque is applied between the input shaft and the output shaft, frictional forces act by the pre-pressure on the contact surfaces between each of the rolling surfaces of the input roller and the output ring and the transmission surface of the transmission roller. The frictional forces act substantially in the same direction at two points substantially in the radial direction of the transmission roller.

The fixed roller and the one of the two transmission rollers which has the fixed shaft are supported by their own fixed shafts. The frictional forces applied to the movable transmission roller accts in the direction to depart this transmission roller from the support roller. Thus, the transmission roller becomes the wedge roller which moves from the support roller in the direction that the unequally-spaced space is narrower (i.e. smaller).

If the wedge roller moves in the direction that the unequally-spaced space is narrower, large normal forces are generated by the wedge action between each of the rolling surfaces of the input roller and the output ring and the transmission surface of the wedge roller. The normal forces cause large normal forces even on the contact surfaces between each of the transmission surfaces of the fixed roller and the other transmission roller and each of the rolling surfaces of the input roller and the output ring, which allows the transmission of the torque without slipping on the contact surfaces.

On the other hand, if the torque is applied in the opposite direction, the support roller prevents the movable transmission roller from moving in the direction that the unequally-spaced space is wider. The normal forces by the wedge action do not increase on the contact surfaces between the transmission surface of the transmission roller and each of the rolling surfaces of the input roller and the output ring, and only the pre-pressure, which is not so large as the normal force, is applied. Thus the rollers slip on the contact surfaces. Therefore, it is possible to obtain the one-way clutch action which does not transfer the torque in the opposite direction.

If the transmission roller is pressed or applied with an elastic force toward the support roller and the support roller and is moved in the direction that the unequally-spaced space is wider with, and if thus the movable transmission roller is moved to a spatial position where the transmission surface of the transmission roller and each of the rolling surfaces of the input roller and the output ring are out of contact with each other, following the support roller, the normal forces by the pre-pressure disappear. Thus, the drag torque decreases greatly. Since the transmission roller supported by the fixed shaft is fixed in position, if the transmission surface of the transmission roller supported by the fixed shaft is in contact with the rolling surfaces of the input roller and the output ring, the drag torque does not decrease sufficiently.

When the support roller is placed at a spatial position where the unequally-spaced space is narrower than that of the movable transmission roller and which is away from the transmission roller, if the transmission roller is pressed or applied with an elastic force in the direction that the unequally-spaced space is narrower to apply a pre-pressure so as to obtain the biting or engagement even in the case of the small torque, the transmission roller moves in the direction that the unequally-spaced space is narrower and acts as the wedge roller when the torque is applied. The support roller does not prevent the moving, so that the movable transmission roller moves in the direction that the unequally-spaced space is narrower, which causes the transmission of the torque.

If the support roller pushes back the movable transmission roller and moves to a spatial position where the transmission surface of the transmission roller and each of the rolling surfaces of the input roller and the output ring are out of contact with each other, the normal forces by the pre-pressure disappear even in this case. Thus, the drag torque decreases greatly.

When the support roller is placed on the side where the unequally-spaced space is wider than that of the movable transmission roller, the support roller may be moved to two spatial positions; one is a spatial position where it applies a pre-pressure to the transmission roller to transmit the torque, and the other is a spatial position where it does not prevent the movement of the movable transmission roller. When the support roller is placed on the side where the unequally-spaced space is narrower than that of the movable transmission roller, the support roller may be moved to two spatial positions; one is a spatial position where the transmission apparatus acts as the one-way clutch, and the other is a spatial position where the clutch is cut off. In the above cases, the positions in the radial direction in the space of the support roller is not strict with respect to the rolling surfaces of the input roller and the output ring. The locus of the movement between the two positions is arbitrary.

When both of the two transmission rollers with the same diameter are supported not by their own shafts but by the support roller, if the support roller is placed on the side where the unequally-spaced space is wider than that of the transmission rollers and placed at a spatial position where it applies a pre-pressure between each of the transmission surfaces of the two transmission rollers and each of the rolling surfaces of the input roller and the output ring, the two transmission rollers can select and play the roles of the wedge roller and the transmission roller with its shaft fixed, which allows the transmission of the two-way torque.

If the two transmission rollers are pressed or applied with elastic forces by springs in the direction that the unequally-spaced space is wider and the support roller is moved in the direction that the unequally-spaced space is wider to remove a pre-pressure, the springs push the transmission rollers and the two transmission rollers depart from the rolling surfaces of the input roller and the output ring. Thus, the clutch is cut off and the drag torque substantially disappears.

As described above, by making such a structure that the two transmission rollers are supported by the support roller, it is possible to halve the number of the transmission roller and the wedge roller, which are supported by their own shafts provided exclusive for the relative directions of the torque in the related arts. This is remarkably effective for the simplified structure, reduced number of components, and decrease in size of the transmission apparatus.

In the case of this structure, the support roller may be provided for each of the two transmission rollers. Alternatively, one common support roller may be provided for the two transmission rollers.

In the following conditions, the transmission apparatus of the present invention has the one-way clutch function as with a normal transmission apparatus of a wedge roller type. The conditions are (i) one of the two support rollers is placed on the side where the unequally-spaced space is wider than that of one of the two transmission roller, (ii) the support roller is placed at a spatial position where it applies a pre-pressure between the transmission surfaces of the one transmission roller and each of the rolling surfaces of the input roller and the output ring, (iii) the one transmission roller is applied with an elastic force by a spring in the direction that the unequally-spaced space is wider, (iv) the other support roller is placed on the side where the unequally-spaced space is narrower, (v) the support roller is placed at a spatial position where it does not prevent the movement of the other transmission roller by the torque, and (vi) the other transmission roller is applied with an elastic force by a spring in the direction that the unequally-spaced space is narrower.

If the support rollers are moved so that the one transmission roller having the one support roller in the direction that the unequally-spaced space is wider and the other transmission roller having the other support roller in the direction that the unequally-spaced space is narrower are away from the rolling surfaces of the input roller and the output ring, the clutch is cut off and the drag torque substantially disappears.

As described above, the positions in the radial direction in the space of each support roller is not strict with respect to the rolling surfaces of the input roller and the output ring. The locus of the movement between the two positions is arbitrary. Thus, the mechanism of moving each support roller to the two positions may be easy to make and simple as long as it functions well enough.

If the support shaft of the support roller is an eccentric shaft, it is possible to switch the position of the support roller between a spatial position where the torque is transmitted and a spatial position where the torque is cut off. The torque can be cut off if there is a small space or gap between the transmission surface of the movable transmission roller and each of the rolling surfaces of the input roller and the output ring. Thus, the eccentric amount of the eccentric shaft required may be extremely small.

However, when the support roller is placed in the direction that the unequally-spaced space is narrower than that of the transmission roller to obtain the one-way clutch function, it is necessary to move the support roller between a spatial position where it does not prevent the movement of the transmission roller by the torque and a spatial position where a pre-pressured is removed. In this case, the moving distance of the support roller is longer than that the case where the support roller is placed at a spatial position where the unequally-spaced space is wider than that of the transmission roller, so that the eccentric amount is required to be large.

According to the structure described above, the transmission roller supported by the support roller no longer needs the fixed shaft. When frictional forces by the torque act on the transmission roller without the fixed shaft, the transmission roller which acts as the wedge roller departs from the support roller. In this case, there is nothing to control the direction of the shaft of the transmission roller, which causes the possibility of skew in which the rotational shaft of the transmission roller leans.

It is possible to prevent the skew by providing a guide surface for the fixed part facing to the side surface of the transmission roller and guiding the side surface of the transmission roller with the guide surface.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a cross sectional view of a transmission apparatus of a wedge roller type associated with a first embodiment of the present invention, cut with a plane perpendicular to an input shaft and an output shaft thereof;
FIG. 2 is a cross sectional view of the transmission apparatus of a wedge roller type, cut with a plane which intersects at right angle with the cutting plane of FIG. 1;
FIG. 3 is a cross sectional view of the transmission apparatus of a wedge roller type rotated along an eccentric shaft, where the support shaft of a support roller in FIG. 1 is the eccentric shaft;
FIG. 4 is a cross sectional view of a transmission apparatus of a wedge roller type in a second embodiment of the present invention, viewed in the same direction as that of FIG. 1;
FIG. 5 is a cross sectional view of the transmission apparatus of a wedge roller type rotated along an eccentric shaft, where the support shaft of a support roller in FIG. 4 is the eccentric shaft;
FIG. 6 is a cross sectional view of a transmission apparatus of a wedge roller type in a third embodiment of the present invention, viewed in the same direction as that of FIG. 1;
FIG. 7 is a cross sectional view of the transmission apparatus of a wedge roller type rotated along an eccentric shaft, where the support shaft of a support roller in FIG. 6 is the eccentric shaft;
FIG. 8 is a cross sectional view of a transmission apparatus of a wedge roller type in a fourth embodiment of the present invention, viewed in the same direction as that of FIG. 1;
FIG. 9 is a cross sectional view of the transmission apparatus of a wedge roller type rotated along an eccentric shaft, where the support shaft of a support roller in FIG. 8 is the eccentric shaft;
FIG. 10 is a cross sectional view of a transmission apparatus of a wedge roller type in which a transmission roller supported by a fixed-shaft is changed in position; and

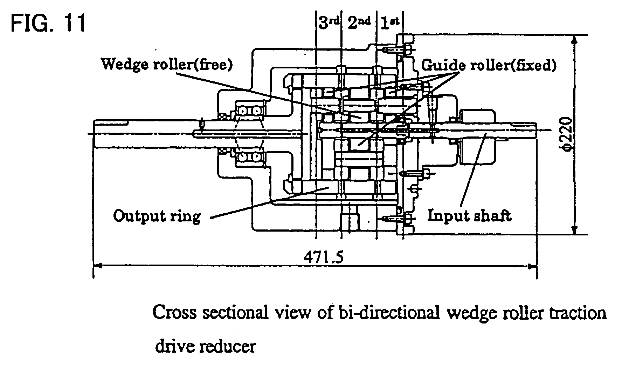

FIG. 11 is a cross sectional view showing one example of a transmission apparatus of a wedge roller type for transmitting two-way torque in the related arts.

### DETAILED DESCRIPTION OF THE PREFERRED EMBODIMENTS

Embodiments of the present invention will now be described with reference to the accompanying drawings.

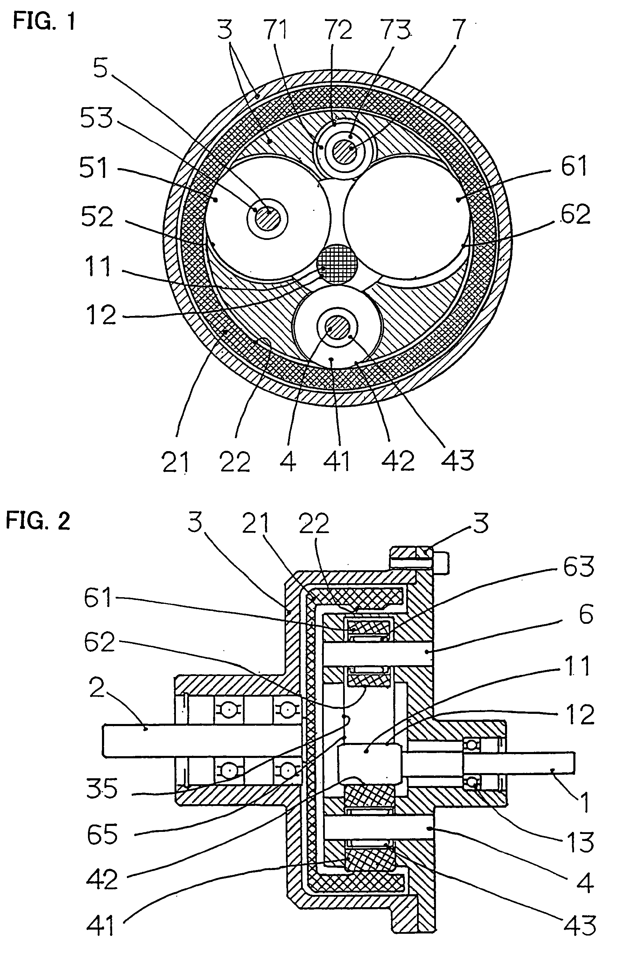

FIG. 1, FIG. 2, and FIG. 3 show the first embodiment.

An input shaft 1 and an output shaft 2 are rotatably supported by a bearing 13 and a bearing 23, respectively, in parallel on fixed parts 3. The input shaft 1 and the output shaft 2 are mutually eccentric.

The input shaft 1 has an input roller 11 coaxially. The output shaft 2 has an output ring 21 coaxially which surrounds the input roller 11.

An outer surface 12 of the input roller 11 and an inner surface 22 of the output ring 21 are cylindrical rolling surfaces. An unequally-spaced space is formed between the rolling surface 12 of the input roller 11 and the rolling surface 22 of the output ring 21.

In this unequally-spaced space, three transmission rollers 41, 51, and 61 are placed, each of which has cylindrical transmission surface in contact with the rolling surface 12 of the input roller 11 and the rolling surface 22 of the output ring 21.

Near a spatial position in the narrowest (i.e., the smallest) space in the unequally-spaced space, the transmission roller 41 (hereinafter referred to as a fixed roller 41) having a cylindrical transmission surface 42 in contact with the two rolling surfaces 12 and 22 is rotatably supported by a bearing 43 around a fixed shaft 4 placed on and fixed to the fixed part 3 in parallel to the input shaft 1 and the output shaft 2.

At a spatial position where the unequally-spaced space is wider (i.e., larger) than that of the fixed roller 41, there are the two transmission rollers 51 and 61 with the same diameter, which have transmission surfaces 52 and 62 whose outer surface is cylindrical and symmetrical with respect to a flat surface including the input shaft 1, the output shaft 2, and the fixed shaft 4.

Out of the two transmission rollers 51 and 61 with the same diameter, the transmission roller 51 is rotatably supported by a bearing 53 around a fixed shaft 5 placed on and fixed to the fixed part 3. Out of the two transmission rollers 51 and 61 with the same diameter, the transmission roller 61 has a support roller 71 with a guide surface 72, whose outer surface is cylindrical and in contact with the transmission surface 62 of the transmission roller 61, at a spatial position where the unequally-spaced space is wider (i.e., larger) than that of the transmission roller 61.

The support roller 71 is rotatably supported by a bearing 73 on a fixed shaft 7 placed on and fixed to the fixed part 3 in parallel to the input shaft 1, the output shaft 2, and the fixed shaft 4 of the fixed roller 41. The shaft 7 is at a spatial position where the support roller 7 applies a pre-pressure to the transmission roller 61 in the direction that the unequally-spaced space is narrower.

A guide surface 35 is provided for the fixed part 3 facing to a side surface 65 of the transmission roller 61. Guiding the side surface 65 of the transmission roller 61 with the guide surface 35 prevents the skew of the transmission roller 61.

When the input roller 11 rotates in a clockwise direction, frictional forces are generated on the contact surfaces between each of the rotating surfaces 12 and 22 of the input roller 11 and the output ring 21 and each of the transmission surfaces 42, 52, and 62 of the fixed roller 41, the transmission roller 51, and the transmission roller 61.

Although these frictional forces act to move the fixed roller 41 and the transmission rollers 51 and 61 in the clockwise direction in the space, the fixed shaft 4 and the fixed shaft 5 stop the movements of the fixed roller 41 and the transmission roller 51 with its shaft fixed, respectively.

The frictional forces act on the transmission roller 61 in the direction to escape from the support roller 71, and the transmission roller 61 is not restricted in movement in the direction to escape from the support roller 71. Thus, the transmission roller 61 can move away from the support roller 71. The movable transmission 61 moves in the direction that the unequally-spaced space is narrower, so that it bites into the contact surfaces between the transmission surface 62 of the transmission roller 61 and each of the rolling surfaces 12 and 22 of the input roller 11 and the output ring 21, and large normal forces are generated by the wedge action on the contact surfaces.

In equilibrium with the normal forces, large normal forces are caused even on the contact surfaces between each of the rolling surface 42 of the fixed roller 41 and the transmission surface 52 of the transmission roller 51 with its shaft fixed and each of the rolling surfaces 12 and 22 of the input roller 11 and the output ring 21. This allows the transmission of the torque without slipping on the contract surfaces between each of the rolling surfaces 12 and 22 of the input roller 11 and the output ring 21 and each of the rolling surfaces 42 and 52 of the transmission rollers 41 and 51 with their shafts fixed and the transmission surface 62 of the movable transmission roller 61.

If the direction of the torque applied to the input roller 11 is counterclockwise, the direction of the frictional force changes to be opposite, which causes the transmission roller 61 supported by the support roller 71 to move to the support roller 71 in the direction that the unequally-spaced space is wider. The support roller 71, however, prevents the transmission roller 61 from moving, so that the large normal forces are not generated by the wedge action on the contact surfaces between the transmission surface 62 of the transmission roller 61 and each of the rolling surfaces 12 and 22 of the input roller 11 and the output ring 21. Therefore, the normal forces do not increase on the contact surfaces between each of the rolling surfaces 42 and 52 of the transmission rollers 41 and 51 with their shafts fixed and each of the rolling surfaces 12 and 22 of the input roller 11 and the output ring 21, and the rollers slip on all of the contact surfaces. The transmission apparatus of the present invention acts as the one-way clutch without transmission the torque in this direction.

However, normal forces by the pre-pressure is applied between each of the transmission surfaces 42, 52, and 62 of the three transmission rollers 41, 51, and 61 and each of the rotating surface 12 of the input roller 11 and the rotating surface 22 of the output ring 21, so that the drag torque by the normal forces does not disappear.

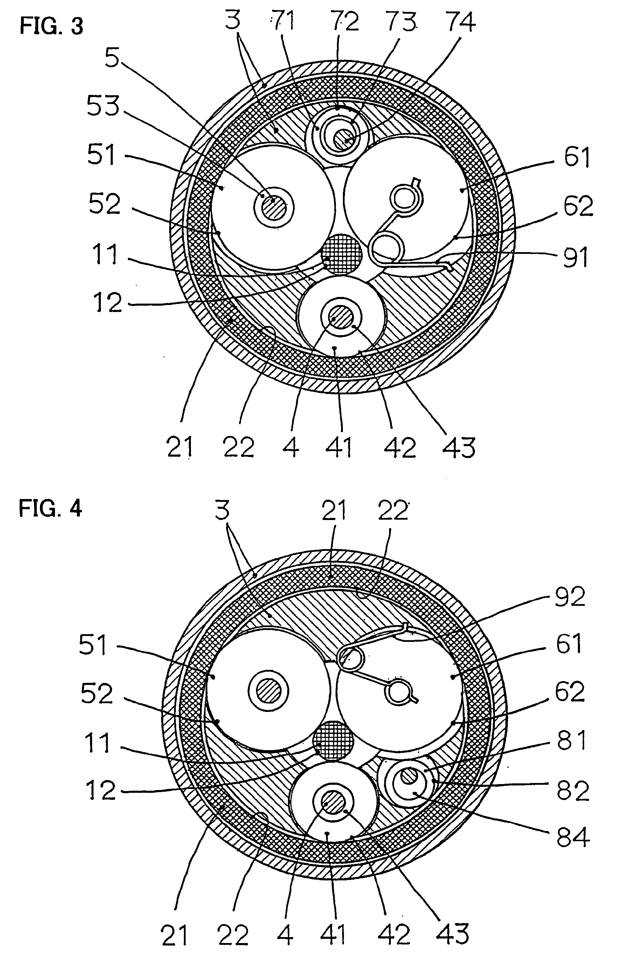

As shown in FIG. 3, suppose that the movable transmission roller 61 is applied with an elastic force by a spring 91 toward the support roller 71. Suppose that the support roller 71 is moved in the direction that the unequally-spaced space is wider, and that the movable transmission roller 61 is moved by the spring 91 to a spatial position where the transmission surface 62 of the transmission roller 61 and each of the rolling surfaces 12 and 22 of the input roller 11 and the output ring 21 are out of contact with each other, following the support roller 71. The normal forces by the pre-pressure disappear between the transmission surface 52 of the transmission roller 51 and each of the rolling surfaces 12 and 22 of the input roller 11 and the output ring 21, so that the drag torque decreases greatly.

If such a mechanism that a support shaft is regarded as an eccentric shaft 74 and that the support roller 71 is moved to the two spatial positions by rotating the eccentric shaft 74 is adopted, it is possible to switch the position of the support roller 71 between the spatial position where the torque is transmitted and the spatial position where the drag torque decreases greatly.

At this time, the contact surfaces may be out of contact with each other, but the amount of elastic approach on the contact surfaces is extremely small. Thus, the moving distance of the support roller 71 is much smaller than that shown in FIG. 3 even by expanding it by the wedge action. Therefore, the eccentric amount of the eccentric shaft 74 required is also small.

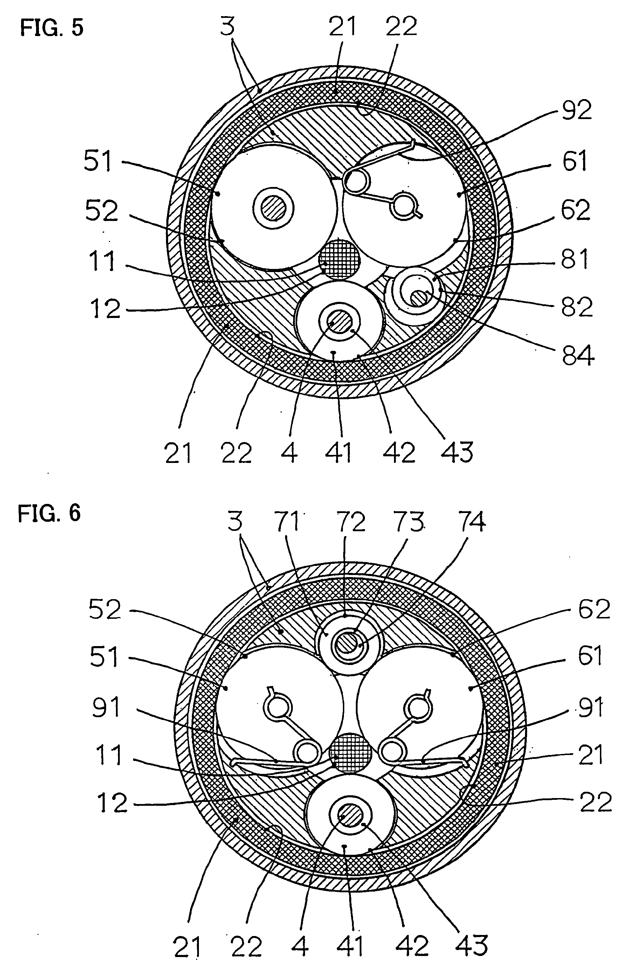

FIG. 4 and FIG. 5 show the second embodiment of the present invention.

A support roller 81 is placed at a spatial position where the unequally-spaced space is narrower than that of the movable transmission roller 61 and which is away from the transmission roller 61. The support roller 81 is supported by an eccentric shaft 84. In this case, if the movable transmission roller 61 is applied with an elastic force by a spring 92 in the direction that the unequally-spaced space is narrower to apply a pre-pressure, when the clockwise torque is applied to the input shaft 1, the transmission surface 62 of the transmission roller 61 bites into the contact surfaces with the rolling surfaces 12 and 22 of the input roller 11 and the output ring 21 by the elastic force of the spring 92, and the support roller 81 does not prevent the transmission roller 61 from moving. The transmission roller 61 moves in the direction that the unequally-spaced space is narrower and large normal forces are generated by the wedge action, which causes the transmission of the torque.

When the counterclockwise torque is applied to the input shaft 1, the wedge action does not work on the movable transmission roller 61. Thus, the transmission apparatus of the present invention acts as the one-way clutch, as with a normal transmission apparatus of a wedge roller type.

As shown in FIG. 5, if the support roller 81 is moved by rotating the eccentric shaft 84 to a spatial position where the transmission surface 62 of the transmission roller 61 and each of the rolling surfaces 12 and 22 of the input roller 11 and the output ring 21 are out of contact with each other, the drag torque substantially disappears.

Even if the support roller 81 is removed and the transmission roller 61 is pressed or applied with an elastic force by the spring 92 in the direction that the unequally-spaced space is narrower to apply a pre-pressure, the fact remains that the transmission apparatus of the present invention has the one-way clutch function. However, there are still remained the normal forces by the pre-pressured on the contact surfaces between the transmission surface 52 of the transmission roller and each of the rolling surfaces 12 and 22 of the input roller 11 and the output ring 21, so that the drag torque is equal to that of a normal transmission apparatus of a wedge roller type. The drag torque is larger than that obtained when the support roller 81 is supported by the eccentric shaft 84 and moved to the spatial position where the transmission surface 62 of the transmission roller 61 and each of the rolling surfaces 12 and 22 of the input roller 11 and the output ring 21 are out of contact with each other.

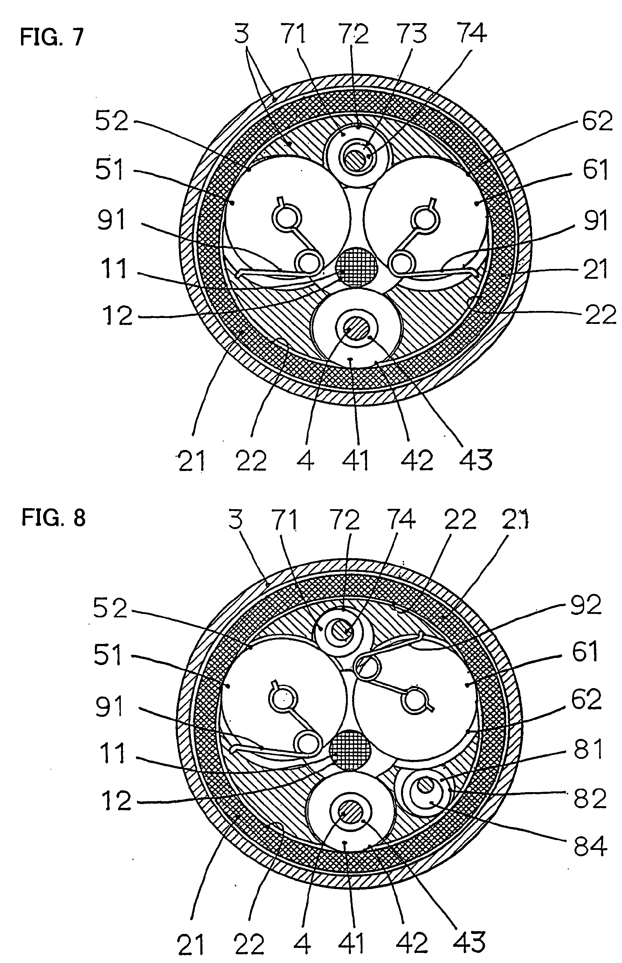

FIG. 6 and FIG. 7 show the third embodiment.

The two transmission rollers 51 and 61 with the same diameter are supported not by their fixed shafts but by the support roller 71. The support roller 71 is placed on the side where the unequally-spaced space is wider than those of the transmission rollers 51 and 61. The support roller 71 is commonly used for the both transmission rollers 51 and 61.

If the guide surface 72 is placed at a spatial position where it applies a pre-pressure between each of the transmission surfaces 52 and 62 of the two transmission rollers 51 and 61 and each of the rolling surfaces 12 and 22 of the input roller 11 and the output ring 21, the two transmission rollers 51 and 61 can select and play the roles of the wedge roller and the transmission roller with the fixed shaft, which allows the transmission of the two-way torque.

As shown in FIG. 7, suppose that the transmission rollers 51 and 61 are pressed or applied with elastic forces by the springs 91 toward the support roller 71 and that the support shaft of the support roller 71 is regarded as the eccentric shaft 74. Suppose that the support roller 71 is moved by rotating the eccentric shaft 74 in the direction that the unequally-spaced space is wider, and that the transmission rollers 51 and 61 are moved by the elastic forces of the springs 91 to spatial positions where each of the transmission surfaces 52 and 62 of the transmission rollers 51 and 61 and each of the rolling surfaces 12 and 22 of the input roller 11 and the output ring 21 are out of contact with each other, following the support roller 71. The drag torque substantially disappears.

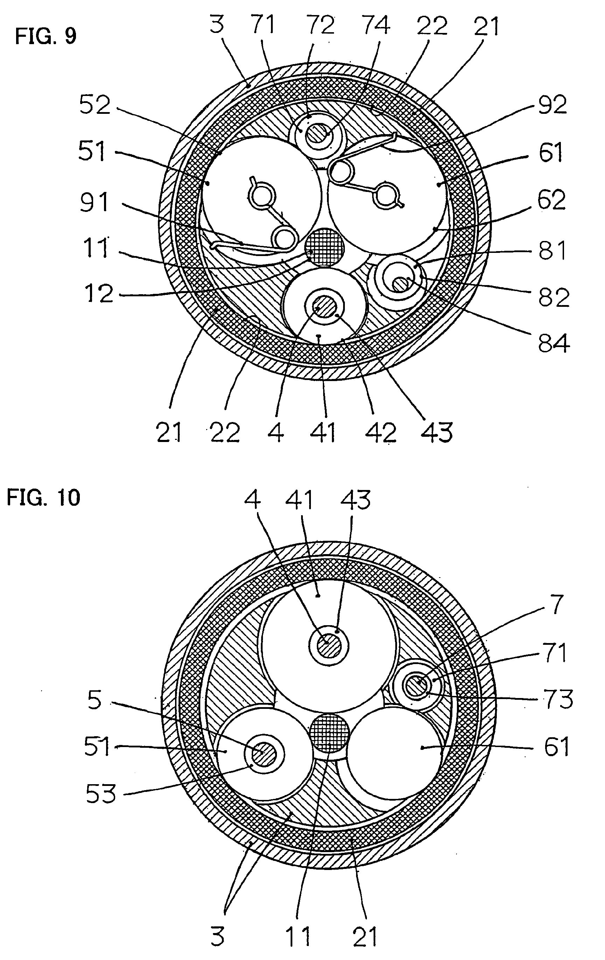

FIG. 8 and FIG. 9 show the fourth embodiment.

The two transmission rollers 51 and 61 with the same diameter are supported not by their fixed shafts but by the support roller 71, as in FIG. 4. One transmission roller 51 is supported by the support roller 71 placed on the side where the unequally-spaced space is wider. The other transmission roller 61 is supported by the support roller 81 placed at a spatial position where the unequally-spaced space is narrower than that of the transmission roller 61, where the support roller 81 does not prevent the movement of the transmission roller 61 by the torque, and which is away from the transmission roller 61. The support rollers 71 and 81 are supported by the support shafts 74 and 84 with the eccentric shafts, respectively.

In FIG. 8, suppose that the transmission roller 51 is pressed or applied with an elastic force by the spring 91 in the direction that the unequally-spaced space is wider to apply a pre-pressure and that the transmission roller 61 is pressed or applied with an elastic force by the spring 92 in the direction that the unequally-spaced space is narrower. When the clockwise torque is applied to the input shaft 1, the support roller 81 does not prevent the transmission roller 61 from moving, so that the transmission roller 61 bites into the contact surfaces with the rolling surfaces 12 and 22 of the input roller 11 and the output ring 21, which causes the transmission of the torque. When the counterclockwise torque is applied, the wedge action does not work on the transmission roller 51. Thus, the transmission apparatus of the present invention acts as the one-way clutch, as with a normal transmission apparatus of a wedge roller type.

As shown in FIG. 9, suppose that the support roller 71 is moved by rotating the eccentric shaft 74 from the state in FIG. 8 so as to move the transmission roller 51 in the direction that the unequally-spaced space is wider. Moreover, suppose that the support roller 81 is moved by rotating the eccentric shaft 84 so as to move the movable transmission roller 61 to a spatial position where the transmission surface 62 of the transmission roller 61 and each of the rolling surfaces 12 and 22 of the input roller 11 and the output ring 21 are out of contact with each other. Even in this case, the drag torque substantially disappears.

The above-described embodiments describe the case that the fixed roller 41 is placed and supported by the fixed shaft 4 at the special position where the unequally-spaced space, which is formed with the rolling surfaces 12 and 22 of the input roller 11 and the output ring 21, is the narrowest. As shown in FIG. 10, the fixed roller 41 supported by the fixed shaft 4 may be placed at a spatial position where the unequally-spaced space is the widest.

In the case of the third embodiment shown in FIG. 5 and FIG. 6, the support roller 71 is required for each of the transmission rollers 51 and 61.

## Claims

1. A transmission-roller supporting mechanism on a transmission apparatus of a wedge roller type **characterized in that** said transmission-roller supporting mechanism comprises:
(i) input and output shafts (1, 2) which are mutually parallel and eccentric and are rotatably supported by a fixed part;
(ii) an input roller (11) which is disposed coaxially to said input shaft and has a cylindrical rolling surface (12) at an outer surface thereof;
(iii) an output ring (21) which is disposed coaxially to said output shaft so as to surround said input roller and has a cylindrical rolling surface (22) at an inner surface thereof;
(iv) three transmission rollers (41, 51, 61) which have cylindrical transmission surfaces (42, 52, 62) at outer surfaces thereof respectively and are placed in contact with the rolling surfaces of said input roller and said output ring, in an unequally-spaced space generated between the rolling surfaces of said input roller and said output ring,
one of said three transmission rollers being a fixed roller supported rotatably by a fixed shaft (4) fixed to the fixed part in parallel to said input and output shafts, which is placed at (I) a spatial position where the unequally-spaced space is at the widest or (II) a spatial position where the unequally-spaced space is the narrowest,
the other two of said three transmission rollers being transmission rollers with the same diameter, which are placed in the middle of (I) the spatial position where the unequally-spaced space is at the widest and (II) the spatial position where the unequally-spaced space is the narrowest and which are placed symmetrically to a flat surface including said input and output shafts and the fixed shaft,
at least one of said two transmission rollers with the same diameter being a movable transmission roller whose center shaft is not fixed; and
(v) a support roller (71, 81) which is disposed on the side where the unequally-spaced space is wider or narrower than that of said movable transmission roller and which has a cylindrical guide surface at an outer surface thereof,
said support roller being supported rotatably by a support shaft (7) supported on the fixed part at a spatial position where the movement of said movable transmission roller is restricted in the space.

2. The transmission-roller supporting mechanism on a transmission apparatus of a wedge roller type according to claim 1, **characterized in that** said transmission-roller supporting mechanism comprises:
a first moving mechanism of moving the spatial position of the support shaft (74) of said support roller (71) to (i) a spatial position where a pre-pressure is applied on the contact surfaces between the transmission surface (62) of said movable transmission roller (61) and each of the rolling surfaces (12, 22) of said input roller (11) and said output ring (21) in the direction that said support roller pushes said movable transmission roller to the side where the unequally-spaced space is narrower, with said support roller initially placed on the side where the unequally-spaced space is wider than that of said movable transmission roller, or (ii) a spatial position where the pre-pressure is removed, so that the contact surfaces are out of contact with each other; and
a first applying mechanism of applying said movable transmission roller with an elastic force in the direction that the unequally-spaced space is wider.

3. The transmission-roller supporting mechanism on a transmission apparatus of a wedge roller type according to claim 1, **characterized in that** said transmission-roller supporting mechanism comprises:
a second moving mechanism of moving the spatial position of the support shaft (84) of said support roller (81) by a second applying mechanism to (i) a spatial position where a pre-pressure is applied on the contact surfaces between the transmission surface (62) of said movable transmission roller (61) and each of the rolling surfaces (12, 22) of said input roller (11) and said output ring (21) and said support surface does not prevent said movable transmission roller from moving to the side where the unequally-spaced space is narrower along with the transmission of torque, with said support roller initially placed on the side where the unequally-spaced space is narrower than that of said movable transmission roller, or (ii) a spatial position where the pre-pressure is removed from the contact surfaces between the transmission surface of said movable transmission roller and each of the rolling surfaces of said input roller and said output ring, so that the contact surfaces are out of contact with each other; and
said second applying mechanism of applying said movable transmission roller with an elastic force in the direction that the unequally-spaced space is narrower.

4. The transmission-roller supporting mechanism on a transmission apparatus of a wedge roller type according to any one of claims 1 to 3, **characterized in that** said transmission-roller supporting mechanism comprises:
a third moving mechanism of moving said support roller (71, 81) by the rotation of an eccentric shaft (74, 84), wherein the support shaft of said support roller functions as the eccentric shaft.

5. The transmission-roller supporting mechanism on a transmission apparatus of a wedge roller type according to any one of claims 1 to 4, **characterized in that** said transmission-roller supporting mechanism comprises two pairs of support rollers (71, 81) corresponding to said two transmission rollers (51, 61) with the same diameter, which allow the transmission and cut-off of two-way rotational torque and a one-way clutch function.
